# EUROPÄISCHE PATENTANMELDUNG

(11) **EP 3 641 103 A1**
(43) Veröffentlichungstag der Anmeldung: **22.04.2020**
(21) Anmeldenummer: 19201053.6
(22) Anmeldetag: 02.10.2019
(51) Int. Cl.: H02K 3/38, H02K 3/52

(54) **GLEICHSTROMMOTOR UND VERFAHREN ZU SEINER HERSTELLUNG**

(30) Priorität: 18.10.2018 DE 102018217858
(71) Anmelder: Bühler Motor GmbH, 90459 Nürnberg (DE)
(72) Erfinder: BRETTSCHNEIDER, Jürgen, 90482 Nürnberg (DE); Antes, Michael, 91358 Kunreuth (DE); Reinecker, Bernd, 90491 Nürnberg (DE)

(57) **Zusammenfassung**

Die Erfindung betrifft einen Gleichstrommotor (1), mit einem permanentmagnetischen, um eine Motorlängsachse (19) drehbar gelagerten Innenrotor (2) und einem in einem Motorgehäuse (15) aufgenommenen bewickelten Statorkern (3) mit mehreren ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine Rückschlussringabdeckung (8) aufweist, welche eine axiale Stirnseite des Rückschlussrings (5) abdeckt, wobei ein Wicklungsdraht (10) um jeweils einen Pol (4) gewickelt ist. Aufgabe der Erfindung ist es bei einem gattungsgemäßen Gleichstrommotor für einen kompakten Aufbau, eine prozesssichere Herstellung, eine einfache Montage und eine sichere Isolierung der Kontakteinheit gegenüber dem Motorgehäuse zu sorgen. Diese Aufgabe wird erfindungsgemäß durch die Merkmale des Anspruchs 1 und dem Verfahrensanspruch 14 gelöst.

## Beschreibung

Die Erfindung betrifft einen Gleichstrommotor (1), mit einem permanentmagnetischen, um eine Motorlängsachse (19) drehbar gelagerten Innenrotor (2) und einem in einem Motorgehäuse (15) aufgenommenen bewickelten Statorkern (3) mit mehreren ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine Rückschlussringabdeckung (8) aufweist, welche eine axiale Stirnseite des Rückschlussrings (5) abdeckt, wobei ein Wicklungsdraht (10) um jeweils einen Pol (4) gewickelt ist.

Außenstatoren mit ausgeprägten Polen können ein oder mehrteilig sein. Bei mehrteiligen Statoren lassen sich die Pole einzeln von außen z. B. durch einen Flyer bewickeln. Der mehrfach unterbrochene magnetische Kreis verringert jedoch den Wirkungsgrad deutlich, deshalb werden Statoren in Verlaufsrichtung der Magnetfeldlinien vielfach einteilig ausgeführt. Einteilige Statoren können aus einem Blechstapel oder aus gepressten Metallpulver bestehen; sie werden in der Regel durch einen Nadelwickler bewickelt. Hierfür ist eine hohle Wickelnadel erforderlich, in welcher der Wicklungsdraht hindurchgeführt wird. Die Wickelnadel hat je nach Drahtdurchmesser einen Mindestdurchmesser. Für eine prozesssichere Fertigung ist zudem ein Mindestabstand zwischen der Wickelnadel und Statorbauteilen einzuhalten. Aus diesem Grund lassen sich herstellungsbedingt nicht alle Geometrien, die physikalisch möglich oder montagetechnisch wünschenswert wären realisieren. Die Statorwicklungen werden häufig um Umlenkpfosten im Bereich der Rückschlussringabdeckung geführt, um Drahtverbindungen zwischen den Polen zu kontaktieren, dies kann durch Schneidklemm-Verbindungen oder durch Schweißkontakte erfolgen. Da die Kontakte sehr nahe am Motorgehäuse angeordnet sind, besteht die Gefahr, dass durch Herstellungsungenauigkeiten oder durch Metallspäne im Kontaktbereich ein elektrischer Kurzschluss oder eine Masseverbindung gebildet wird.

Aufgabe der Erfindung ist es daher bei einem gattungsgemäßen Gleichstrommotor für einen kompakten Aufbau, eine prozesssichere Herstellung, eine einfache Montage und eine sichere Isolierung der Kontakteinheit gegenüber dem Motorgehäuse zu sorgen.

Diese Aufgabe wird erfindungsgemäß durch die Merkmale des Anspruchs 1 und dem Verfahrensanspruch 14 gelöst. Da der Isolierstoffkörper (7) mehrere um den Umfang verteilte und durch Filmscharniere (100) mit ihm verbundene Abdecklappen (101) aufweist, welche zwischen dem Motorgehäuse (15) und dem Wicklungsdraht (10) angeordnet sind, werden mögliche verbogene Wicklungsdrähte vom Motorgehäuse abgedrängt und es kann zu keinen Masseschluss bei durch Vibration o. ä. abisolierten Wicklungsdrähten mit dem Motorgehäuse kommen. Weiter sind die Abdecklappen platzsparend angeordnet und lassen sich problemlos ohne zusätzliche Arbeitsschritte montieren.

Die Montage des Stators in das Motorgehäuse wird durch eine tangentiale Ausrichtung der Filmscharniere (100) erleichtert. Dadurch lassen sich die Abdecklappen (101) bei axialer Montage einfach um die Filmscharniere (100) klappen.

Es ist vorgesehen, dass die Abdecklappen (101) in Winkelbereichen zwischen den Polen angeordnet sind. Zwischen den Abdecklappen (101) bleibt Bauraum für die Fixierung einer Kontakteinheit (16).

Die Abdecklappen (101) sind vorgesehen, um die Kontakteinheit (16) gegenüber dem Motorgehäuse (15) zu isolieren. Beim Montagevorgang können Drahtisolierungen dadurch nicht mehr abgerieben werden.

Insbesondere Kontakthaken (17) der Kontakteinheit (16) sollen durch die Abdecklappen (101) isoliert werden. In der Regel werden diese Kontakthaken (17) mit dem Wicklungsdraht verschweißt, dabei kann es zu Verformungen oder zu Schweißspritzern kommen, die zu Kurzschlüssen führen können.

Zweckmäßigerweise ist vorgesehen, dass die Abdecklappen (101) bogenförmig ausgebildet sind, wobei deren Radius dem Radius des Statorkerns (3) entspricht oder angenähert ist. Dadurch passen sich die Abdecklappen optimal der Gehäuseform an und lassen sich problemlos montieren.

Weiter wird vorgeschlagen, dass die Abdecklappen (101) eine Länge aufweisen, die größer ist als die Wicklungskopfhöhe. Dadurch lassen sich der gesamte Wicklungskopfbereich und der Kontaktbereich sicher abdecken.

Die Abdecklappen (101) sind vorzugsweise zwischen axial vorspringenden Führungen (54) des Isolierstoffkörpers (7) angeordnet, die selbst eine isolierende Wirkung haben. Zusätzlich haben die Führungen die Aufgabe eine Kontakteinheit (16) aufzunehmen und eine Isolationskrone (53) zu befestigen, welche die Kontakteinheit (16) in Axialrichtung abdeckt. Somit ist die Kontakteinheit (16) optimal geschützt.

Weiter ist vorgesehen, dass die Führungen (54) U-förmig ausgebildet sind. Dadurch lässt sich eine seitliche Führung für die Isolationskrone (53) einerseits und eine Aufnahme der Abdecklappen (101) andererseits ohne eine gegenseitige Beeinflussung beider Funktionen realisieren Zudem lässt sich die Kontakteinheit (16) innerhalb der Führungen (54) zentrieren.

Die Isolationskrone (53) besteht aus einem Abdeckring (64) und Kronenfüßen (63) welche in die Führungen (54) eingreifen. Der Abdeckring (64) hat die Aufgabe die Kontakteinheit axial zu schützen und zu isolieren. Die Kronenfüße (63) dienen zur Befestigung der Isolationskrone (53), sie haben aber auch die Aufgabe den segmentierten Isolationsring um die Kontakteinheit (16) zu komplettieren. Die Führungen (54) sind hierzu im Winkelbereich der Pole (4) angeordnet, während die Abdecklappen im Bereich der Statornuten (6) angeordnet sind.

In einem Vormontagezustand sind die Abdecklappen (101) um einen Winkel von 40° bis 50° gegenüber der Motorlängsachse angeordnet. Dies erleichtert die Bewicklung des Stators (30). Zudem sind U-förmige Drahtverbindungen (18) aus montagetechnischen Gründen während der Bewicklung des Stators (30) vorzugsweise schräg nach außen angeordnet und werden nach dem Wickelvorgang in eine axiale Position gebogen. Bei diesen Vorgängen wären die Isolationslappen (101) hinderlich. Daher sind sie über Filmscharniere mit dem Isolierstoffkörper (7) einstückig.

Die Aufgabe der Erfindung wird auch durch ein Verfahren gelöst, mit folgenden Verfahrensschritten: a) Bereitstellung eines Motorgehäuses (15) und eines bewickelten Stators (30), mit einer Kontakteinheit (16) und einem Isolierstoffkörper (7), welcher mit Filmscharniere (100) angebundene und gegenüber der Motorlängsrichtung (19) abgewinkelten Abdecklappen (101) aufweist; b) axiales Einführen des Stators (3) in das Motorgehäuse, wobei die Abdecklappen (101) durch das Motorgehäuse (15) umgeklappt werden und sich zwischen der Kontakteinheit (16) und dem Motorgehäuse (15) ausrichten.

Durch die beschriebene Anordnung der Abdecklappen (101) lassen sie sich ohne Zusatzaufwand oder zusätzliche Verfahrensschritte einfach mit der ohnehin notwendigen Montagebewegung in das Motorgehäuse einführen.

Weiter wird durch Aufsetzen einer Isolationskrone auf den Isolierstoffkörper (7) und Schließen des Gehäuses durch einen Lagerschild oder ein Anbauteil (65), wie eine Pumpe oder ein Getriebe der Montagevorgang abgeschlossen.

Ein Ausführungsbeispiel der Erfindung wird nachfolgend anhand der Zeichnung näher erläutert. Es zeigen:
- Fig. 1: eine einen Stator in einem ersten Montagezustand,
- Fig. 2: einen Isolierstoffkörper,
- Fig. 3: den Stator in einem zweiten Montagezustand,
- Fig. 4: den Stator in einem dritten Montagezustand,
- Fig. 5: den Stator in einem vierten Montagezustand,
- Fig. 6: eine Ansicht eines montierten Stators,
- Fig. 7: eine Schnittansicht des montierten Stators und
- Fig. 8: einen Kontaktträger

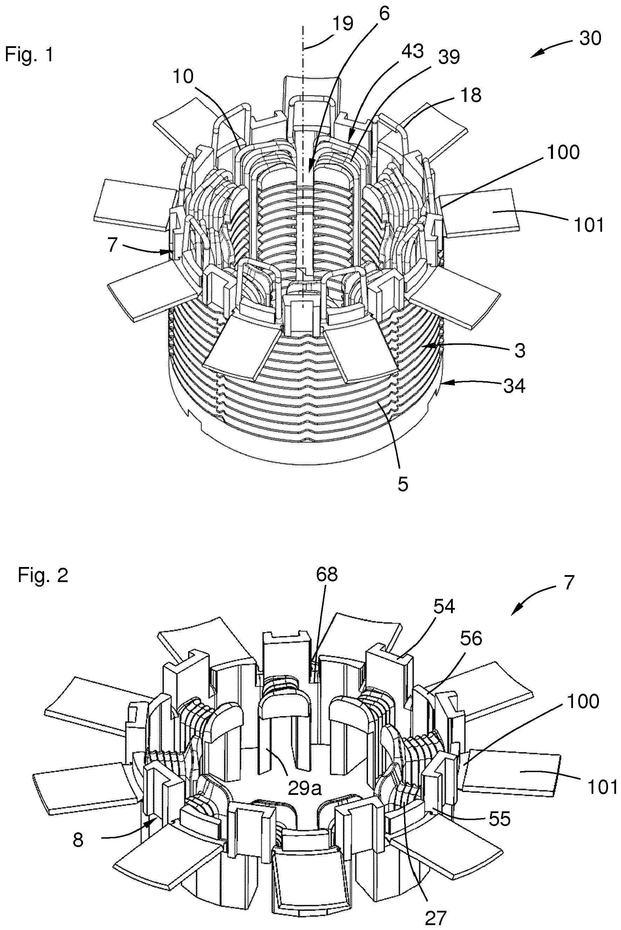

Fig. 1 zeigt einen mit einem Wicklungsdraht 10 bewickelten, neun ausgeprägte nach innen gegen eine Motorlängsachse 19 gerichtete Pole 4 aufweisenden Stator 30, mit einer Isolationskappe 34, einem Statorkern 3 mit Rückschlussring 5, einem Isolierstoffkörper 7, Drahtverbindungen 18 und Abdecklappen 101, die über Filmscharniere 100 mit dem Isolierstoffkörper 7 einstückig sind. Für die Bewicklung des Stators 30 sind die Abdecklappen 101 zur Motorlängsachse 19 abgewinkelt ausgeführt. Im vorliegenden Beispiel beträgt der Winkel ca. 90°. Die Drahtverbindungen 18 gehen aus von einem Wicklungsende einer ersten Spule 39 und führen zu einem Wicklungsanfang einer benachbarten Spule in derselben Statornut 6 und erstrecken sich axial über einen Wicklungskopf 43 hinaus und sind U-förmig gebogen.

Fig. 2 zeigt einen Isolierstoffkörper 7 als Einzelbauteil. Dieser weist im Einzelnen eine Nutauskleidung 29 je Pol, mit Rillen 27, eine Rückschlussringabdeckung 8, die Abdecklappen 101, die Filmscharniere 100, Führungen 54, Konturen 56 und Schlitze 55 auf.

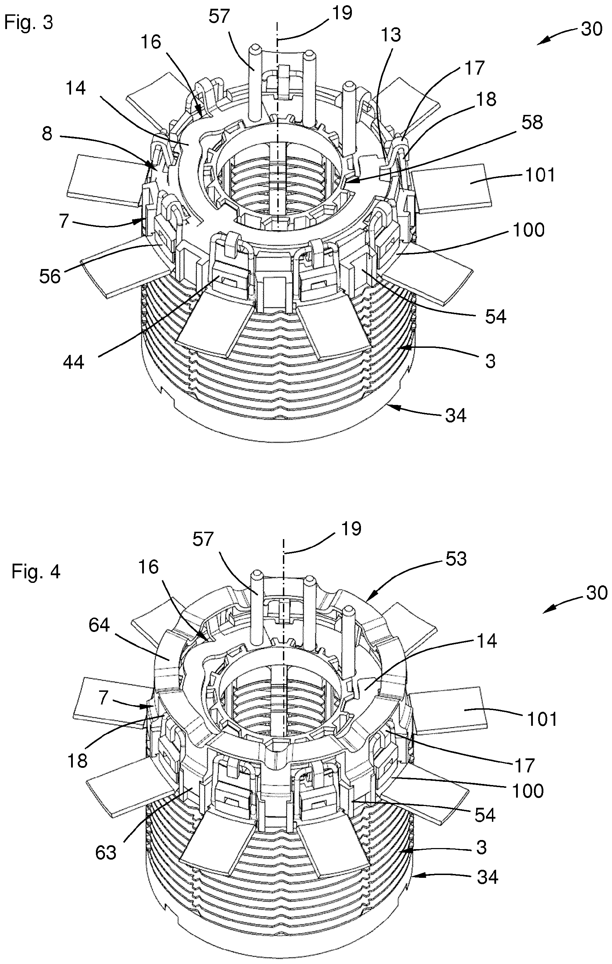

Fig. 3 zeigt den Stator 30 in einem zweiten Montagezustand, mit der Isolationskappe 34, dem Statorkern 3, dem Isolierstoffkörper 7, den Abdecklappen 101, den Filmscharnieren 100, den Drahtverbindungen 18, der Motorlängsachse 19 und einer Kontakteinheit 16, mit Sammelschienen 14, Kontaktvorsprüngen 13, Kontakthaken 17 und einem Kontaktträger 58 und Anschlussstiften 57. Die Abdecklappen 101 sind so angeordnet, dass sie nach einem Umklappprozess eine Abdeckung und eine Isolierung für die Drahtverbindungen 18 und die Kontakthaken 17 bilden. Ihre Breite ist so gewählt, dass sie genau zwischen Führungen 54 passen, die axial aus der Rückschlussringabdeckung 8 vorspringen.

Fig. 4 zeigt den Stator 30 in einem dritten Montagezustand. Zusätzlich zu Fig. 3 ist hier eine ringförmige Isolationskrone 53 auf den Isolierstoffkörper 7 aufgesetzt. Dabei sind axial vorspringende Kronenfüße 63 in die Führungen 54 eingeführt. Diese sind so dimensioniert, dass sie radial nicht über den Statorkern 3 hinausragen. Weiter sind gezeigt die Isolationskappe 34, die Kontakteinheit 16, die Kontakthaken 17, die Drahtverbindungen 18, die Anschlussstifte 57, die Abdecklappen 101 und die Filmscharniere 100.

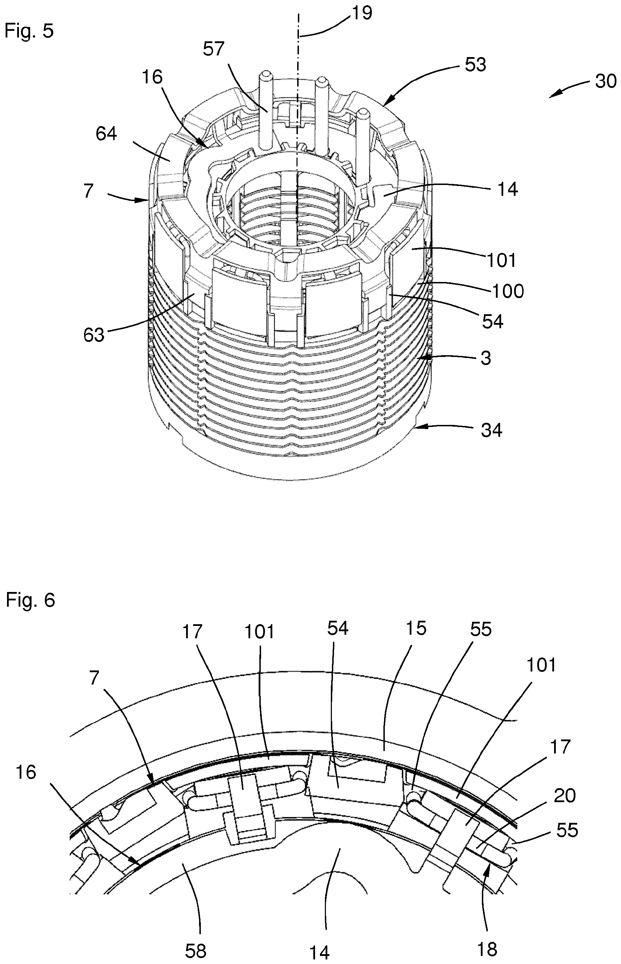

Fig. 5 zeigt den Stator 30 in einem vierten Montagezustand. Hierbei sind die Abdecklappen 101 umgeklappt und tauchen in den Raum zwischen den Führungen 54 ein, so dass sie radial nicht aufbauend wirken. Weiter sind gezeigt die Sammelschienen 14, die Anschlussstifte 57, die Motorlängsachse 19, der Isolierstoffkörper 7, die Isolationskrone 53, mit ihren Kronenfüßen 63, die in die Führungen 54 eintauchen, die Isolationskappe 34, die Filmscharniere 100 und der Kontaktträger 58.

Fig. 6 zeigt den Stator 30 in einem fünften Montagezustand, wobei dieser in einem Motorgehäuse 15 eingebaut ist. Weiter sind der Isolierstoffkörper 7, die Kontakteinheit 16, die Sammelschienen 14, die Drahtverbindungen 18, die Kontakthaken 17, die Führungen 54, die Schlitze 55 und die Abdecklappen 101 dargestellt.

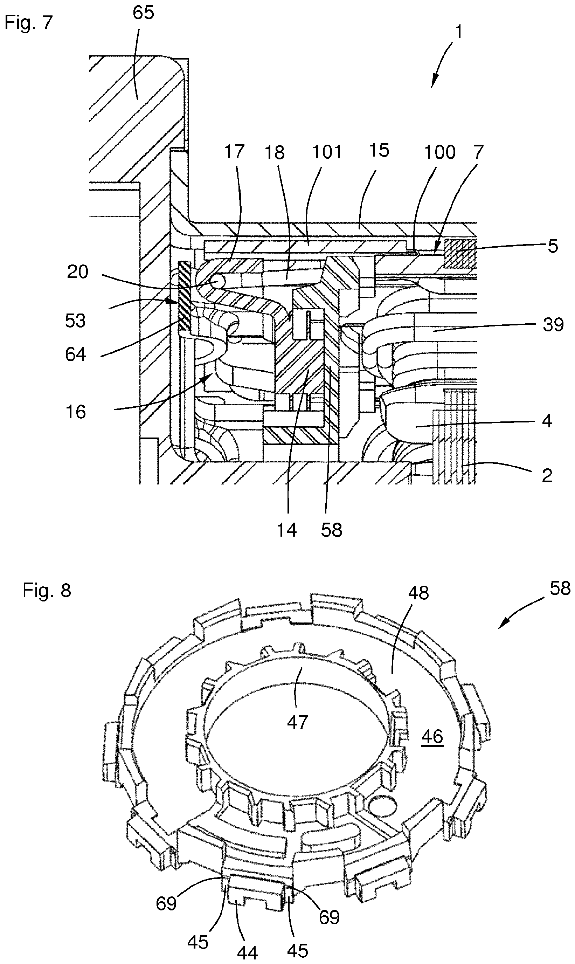

Fig. 7 zeigt eine Schnittansicht eines Gleichstrommotors 1 mit dem im Motorgehäuse 15 montierten Stators 30, mit einer Spule 39, dem Statorkern 3, dem Rückschlussring 5, dem Innenrotor 2, dem Isolierstoffkörper 7, der Kontakteinheit 16, dem Pol 4, der Sammelschiene 14, dem Kontakthaken 17, dem Joch 20 der Drahtverbindung 18, der Abdecklasche 101, dem Filmscharnier 100, der Isolationskrone 53 und einem Anbauteil 65, welches das Motorgehäuse schließt.

Fig. 8 zeigt den in seiner Grundform ringförmigen Kontaktträger 58, dessen Querschnittsform in erster Näherung U-förmig ist, mit einem Innenrand 47, einem Außenrand 48 und einem Boden 46. Der Bereich zwischen Innenrand 47, Außenrand 48 und Boden dient als Aufnahmeraum für die Sammelschienen 14 (siehe Fig. 3). Am Außenrand 48 sind Drahtanschlagflächen 45 angeordnet. Die Drahtanschlagflächen 45 weisen jeweils eine Außenkante 69 auf, um welche der Wicklungsdraht gebogen wird. Zwischen jeweils zwei Drahtanschlagflächen ist ein radial nach außen vorspringender Axialanschlag 44 angeordnet.

### Bezugszeichenliste

- 1: Gleichstrommotor
- 2: Innenrotor
- 3: Statorkern
- 4: Pol
- 5: Rückschlussring
- 6: Statornut
- 7: Isolierstoffkörper
- 8: Rückschlussringabdeckung
- 10: Wicklungsdraht
- 13: Kontaktvorsprung
- 14: Sammelschiene
- 15: Motorgehäuse
- 16: Kontakteinheit
- 17: Kontakthaken
- 18: Drahtverbindung
- 19: Motorlängsachse
- 27: Rille
- 29: Nutauskleidung
- 30: Stator
- 34: Isolierstoffkappe
- 39: Spule
- 43: Wicklungskopf
- 44: Axialanschlag
- 45: Drahtanschlagfläche
- 46: Boden
- 47: Innenrand
- 48: Außenrand
- 53: Isolationskrone
- 54: Führung
- 55: Schlitz
- 56: Kontur
- 57: Anschlussstift
- 58: Kontaktträger
- 63: Kronenfuß
- 64: Abdeckring
- 65: Anbauteil
- 69: Außenkante
- 100: Filmscharnier
- 101: Abdecklappen

## Patentansprüche

1. Gleichstrommotor (1), mit einem permanentmagnetischen, um eine Motorlängsachse (19) drehbar gelagerten Innenrotor (2) und einem in einem Motorgehäuse (15) aufgenommenen bewickelten Statorkern (3) mit mehreren ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine Rückschlussringabdeckung (8) aufweist, welche eine axiale Stirnseite des Rückschlussrings (5) abdeckt, wobei ein Wicklungsdraht (10) um jeweils einen Pol (4) gewickelt ist, **dadurch gekennzeichnet, dass** der Isolierstoffkörper (7) mehrere um den Umfang verteilte und durch Filmscharniere (100) mit ihm verbundene Abdecklappen (101) aufweist, welche zwischen dem Motorgehäuse (15) und dem Wicklungsdraht (10) angeordnet sind.

2. Gleichstrommotor nach Anspruch 1, **dadurch gekennzeichnet, dass** die Filmscharniere (100) in tangentialer Richtung ausgerichtet sind.

3. Gleichstrommotor nach Anspruch 1 oder 2, **dadurch gekennzeichnet, dass** die Abdecklappen (101) in Winkelbereichen zwischen den Polen (4) angeordnet sind.

4. Gleichstrommotor nach Anspruch 1, 2 oder 3, **dadurch gekennzeichnet, dass** die Abdecklappen (101) eine Kontakteinheit (16) gegenüber dem Motorgehäuse (15) isolieren.

5. Gleichstrommotor nach Anspruch 4, **dadurch gekennzeichnet, dass** die Abdecklappen (101) Kontakthaken (17) der Kontakteinheit (16) gegenüber dem Motorgehäuse isolieren.

6. Gleichstrommotor nach zumindest einem der Ansprüche 1 bis 5, **dadurch gekennzeichnet, dass** die Abdecklappen (101) bogenförmig ausgebildet sind, wobei deren Radius dem Radius des Statorkerns (3) entspricht oder angenähert ist.

7. Gleichstrommotor nach zumindest einem der Ansprüche 1 bis 6, **dadurch gekennzeichnet, dass** die Abdecklappen (101) eine Länge aufweisen, die größer ist als die Wicklungskopfhöhe.

8. Gleichstrommotor nach zumindest einem der Ansprüche 1 bis 7, **dadurch gekennzeichnet, dass** die Abdecklappen (101) zwischen axial vorspringenden Führungen (54) des Isolierstoffkörpers (7) angeordnet sind.

9. Gleichstrommotor nach Anspruch 8, **dadurch gekennzeichnet, dass** die Führungen (54) eine Isolationskrone (53) aufnehmen, welche die Kontakteinheit (16) axial bedeckt.

10. Gleichstrommotor nach Anspruch 8 oder 9, **dadurch gekennzeichnet, dass** die Führungen (54) U-förmig ausgebildet sind.

11. Gleichstrommotor nach Anspruch 8, 9 oder 10, **dadurch gekennzeichnet, dass** die Isolationskrone (53) aus einem Abdeckring (64) und Kronenfüßen (63) besteht, welche in die Führungen (54) eingreifen.

12. Gleichstrommotor nach Anspruch 8, 9, 10 oder 11, **dadurch gekennzeichnet, dass** die Führungen (54) im Winkelbereich der Pole (4) angeordnet sind.

13. Gleichstrommotor nach zumindest einem der Ansprüche 1 bis 10, **dadurch gekennzeichnet, dass** die Abdecklappen (101) in einem Vormontagezustand, um einen Winkel von 40° bis 50° gegenüber der Motorlängsachse angeordnet sind.

14. Verfahren zur Herstellung eines Gleichstrommotors (1), mit einem permanentmagnetischen, um eine Motorlängsachse (19) drehbar gelagerten Innenrotor (2) und einem in einem Motorgehäuse (15) aufgenommenen bewickelten Statorkern (3) mit mehreren ausgeprägten nach innen gerichteten Polen (4), welche in Umfangsrichtung mit einem Rückschlussring (5) einstückig und durch Statornuten (6) voneinander getrennt sind, einem Isolierstoffkörper (7), welcher die Statornuten (6) auskleidet und eine Rückschlussringabdeckung (8) aufweist, welche eine axiale Stirnseite des Rückschlussrings (5) abdeckt, wobei ein Wicklungsdraht (10) um jeweils einen Pol (4) gewickelt ist, **gekennzeichnet durch** folgende Verfahrensschritte: a) Bereitstellung eines Motorgehäuses (15) und eines bewickelten Stators (30), mit einer Kontakteinheit (16) und einem Isolierstoffkörper (7), welcher mit Filmscharniere (100) angebundene und gegenüber der Motorachsrichtung (19) abgewinkelten Abdecklappen (101) aufweist; b) axiales Einführen des Stators (30) in das Motorgehäuse, wobei die Abdecklappen (101) durch das Motorgehäuse (15) umgeklappt werden und sich zwischen der Kontakteinheit (16) und dem Motorgehäuse (15) ausrichten.

15. Verfahren nach Anspruch 14, **gekennzeichnet durch** den weiteren Verfahrensschritt: c) Aufsetzen einer Isolationskrone auf den Isolierstoffkörper (7); d) Schließen des Gehäuses durch einen Lagerschild oder ein Anbauteil (65), wie eine Pumpe oder ein Getriebe.
